# EUROPÄISCHE PATENTSCHRIFT

(11) **EP 0 774 348 B1**
(45) Veröffentlichungstag und Bekanntmachung des Hinweises auf die Patenterteilung: **04.06.2003**
(21) Anmeldenummer: 96117987.6
(22) Anmeldetag: 09.11.1996
(51) Int. Cl.: B32B 27/32, B65D 75/38, A61J 1/00

(54) **Polymer-Composit-Schlauchfolie**
Tubular multilayered polymerfilm
Film polymère multicouche tubulaire

(30) Priorität: 16.11.1995 DE 19542716
(43) Veröffentlichungstag der Anmeldung: 21.05.1997
(73) Patentinhaber: B. BRAUN MELSUNGEN AG, 34212 Melsungen (DE)
(72) Erfinder: Loretti, Maurice, c/o Vifor Medical S.A., 1023 Crissier/VD (CH); Chattot, R., 1023 Crissier (CH); Djokic, S., 1023 Crissier (CH)
(74) Vertreter: Jönsson, Hans-Peter, Dr.Dipl.-Chem.

(56) Entgegenhaltungen:
- EP-A- 0 638 487
- WO-A-93/11938
- WO-A-95/26268
- DE-A- 3 624 543
- US-A- 4 537 305
- US-A- 4 857 409
- MARILYN BAKKER: "The Wiley Encyclopedia of Packaging Technology" 1986 , JOHN WILEY & SONS , NEW YORK XP002058613 * Seite 270 - Seite 275; Tabellen 1,5 *

## Beschreibung

Gegenstand der vorliegenden Erfindung ist eine sterilisierbare coextrudierte heißsiegel- und peelfähige Umverpackung aus Polymer-Composit-Schlauchfolie für Behälter enthaltend beispielsweise Arzneimittel oder Infusionslösungen.

Lösungen, Suspensionen, Feststoffe oder Gemische zur parenteralen-, enteralenoder Sondenernährung werden im Stand der Technik üblicherweise in verschiedenen Arten von Behältern unter sterilen Bedingungen abgefüllt. Hierbei ist die Verwendung von Beuteln, die die genannten Inhaltsstoffe enthalten, im Stand der Technik weit verbreitet. Die einzelnen Inhaltsstoffe sind teils vorgemischt, teils liegen jedoch die Inhaltsstoffe in getrennten räumlichen Anordnungen vor, so daß eine Mischung der Inhaltsstoffe häufig erst unmittelbar vor der Anwendung am Krankenbett des Patienten vorgenommen wird.

Die Beutel enthalten hierbei Entnahmevorrichtungen zur möglichst sterilen Entnahme der Inhaltsstoffe. Wird jedoch auch eine sterile Außenfläche des Behälters und insbesondere die Sterilität der Entnahmevorrichtungen verlangt, so ist es erforderlich, die genannten Behälter mit einer Umverpackung zu versehen, die eine Sterilität gewährleistet.

So hat sich im Stand der Technik eine Umverpackung aus Polyvinylidenchlorid-Copolymeren (PVDC) durchgesetzt, die jedoch nicht geeignet ist, die Sterilität der Beuteloberfläche und der Entnahmevorrichtung zu gewährleisten. Ein Nachteil der Verwendung von Polyvinylidenchlorid ist jedoch der nicht umweltverträgliche Chlorgehalt des Polyvinylidenchlorid-Copolymers, daß darüberhinaus nicht mit üblichen Verfahren sterilisierbar ist. Die ausgezeichneten Permeabilitäten für Gas, Wasserdampf, Aromastoffe sowie Fett unter trockenen und feuchten Bedingungen überwogen jedoch die Recyclingproblemen in der Vergangenheit.

Im Stand der Technik sind weitere Materialien für entsprechende Sperrschichten (barrier polymers) bekannt. So wird in Ullmann's Encyclopedia of Industrial Chemistry, 5. Auflage, Band 11, in Kapitel 6.5.10. neben PVDC auch Polyvinylalkohol und Ethylen-Vinylalkohol-Copolymere als Sperrschicht beschrieben.

In Ethylen-Vinylälkohol-Copolymeren wird die Feuchtigkeitsempfindlichkeit des Polyvinytalkohols durch die Copolymerisation mit Ethylen vermindert. Der übliche Vinylalkoholgehalt beträgt 60 bis 82 % entsprechend einem Ethylengehalt von 18 bis 40 %. Im Kapitel 6.5.12 werden Polymer-Composite beschrieben, da für viele Anwendungen eine einzelne Schicht eines Polymers den Anforderungen an das zu verpackende Gut nicht gerecht wird. Unter anderem wird hier die Coextrusion von verschiedenen Polymeren beschrieben, um beispielsweise die thermischen Eigenschaften oder die Sperreigenschaften zu verbessern.

WO 95/26268 beschreibt eine Mehrschicht-Composit-Folie, die wenigstens eine Schichtenfolge aufweist, die eine heterophasige Polypropylen(co)polymer/Klebeschicht/EVOH/Klebeschicht/Polyolefinschicht umfasst, wobei das heterophasige Polypropylen(co)polymer aus einem Homopolymer von Propylen oder einem Copolymer von Propylen mit Ethylen und/oder einem alpha-Olefin besteht.

DE 36 24 543 A1 beschreibt eine Mehrschichtfolie, die eine Polypropylenbasis-Folie mit einer Schichtdicke von 20 bis 50 µm sowie wenigstens eine heißsiegelbare Schicht aus Olefinpolymeren in einer Dicke von 0,8 bis 2 µm umfasst.

US 4,537,305 A beschreibt eine feste Umverpackung zur Aufbewahrung von Kunststoffverpackungen medizinischer Flüssigkeiten. Diese Umverpackung besteht aus einem mehrschichtigen schüsselförmigen Bodenteil aus Polyolefinschichten und dazwischenliegender gasdichter Schicht sowie einer auf dieses über 1 mm dicke schüsselförmige Bodenteil heißsiegelbare mehrschichtigen Abdeckfolie.

WO 93/11938 beschreibt mehrschichtige Sperrmaterialien bestehend aus einer Gassperrschicht, aus einem nicht Chlor enthaltenden organischen Polymer, das im wesentlichen Sauerstoff-undurchlässig ist und eine Feuchtigkeitsbarrriereschicht aus einem Propylenmesophasenmaterial. Diese Materialien weisen einen hohen Ethylengehalt auf, wodurch sie unter Bedingungen einer Wasserdampfsterilisation ihre Sperreigenschaft für Gase verlieren.

US-4,857,409 A beschreibt mehrschichtige Kompositfolien, die eine Kernschicht bestehend aus 50 bis 85 Gew.-% Gummi und 15 bis 40 Gew.-% eine Polyolefins und wenigstens eine äußere Polyolefinhautschicht enthalten, die auf diese Kernschicht coextrudiert wird.

Das Problem der vorliegenden Erfindung besteht somit in der Bereitstellung einer sterilisierbaren coextrudierten Polymer-Composit-Schlauchfolie mit ausreichender thermischer und mechanischer Stabilität zur Umverpackung von Behältern enthaltend Lösungen, Suspensionen, Feststoffe oder Gemische zur parenteralen-, enteralen- oder Sondenernährung, gegebenenfalls in getrennter räumlicher Anordnung der Inhaltsstoffe, die geeignet ist, Peel- und Heißsiegelfähigkeit und eine sterile Außenfläche des Behälters und insbesondere die Sterilität der Entnahmevorrichtungen zu gewährleisten.

Das vorgenannte Problem der Erfindung wird erfindungsgemäß gelöst durch eine sterilisierbare heißsiegel- und peelfähige Umverpackung aus coextrudierter Polymer-Composit-Schlauchfolie für Behälter enthaltend Lösungen, Suspensionen, Feststoffe oder Gemische zur parenteralen-, enteralen- oder Sondenernährung, gegebenenfalls in getrennter räumlicher Anordnung der Inhaltsstoffe mit einem dreilagigen Aufbau der Schlauchfolie bei einer Schichterfolge
a) Polypropylen-Homopolymer mit einer Dicke von 20 bis 40 µm,
b) Ethylen-Vinylalkohol-Copolymer mit einem Ethylengehalt von 29 bis 32 Mol.-%, einer Schichtdicke von 15 bis 35 µm und
c) einem homophasigen Polypropylen-Homopolymer oder Polypropylen-Copolymer einer Dicke von 30 bis 50 µm, das geeignet ist, die Innenseite eines Umbeutels des Behälters zu bilden.

Mit Hilfe der vorliegenden Erfindung ist es möglich, Schlauchfolien und daraus sterilisierbare Umverpackungen der genannten Behälter, insbesondere Beutel im Mehrschicht-Coextrusions-Blasverfahren herzustellen, die eine umweltverträgliche Entsorgung möglich machen. Darüber hinaus ist es möglich, den Behälter, der die Inhaltsstoffe enthält, vor der Sterilisierung in den Umbeutel einzubringen und diesen gemeinsam mit der Umverpackung zu sterilisieren. Hierbei wird neben einer Sterilisierung der Oberfläche des Behälters auch eine Sterilisierung der Entnahmevorrichtung erreicht. Neben der gemeinsamen Sterilisierung der die Umverpackung bildenden Polymer-Composit-Schlauchfolie und des Behälters, ist auch die getrennte Sterilisierung und nachfolgende Verpackung des Behälters in dem Beutel möglich. Die so erhaltenen Beutel sind heißsiegelfähig.

Kern des erfindungsgemäßen dreilagigen Schichtaufbaus der Blasfolie ist die Ethylen-Vinylalkohol-Copolymerschicht mit einem definierten Ethylengehalt. Wird nämlich der Ethylengehalt zu hoch gewählt, so wird die Ethylen-Vinylalkohol-Copolymerschicht bei der üblichen Wasserdampfsterilisation zerstört, und verliert seine Sperreigenschaften für Gase, so daß das Problem der Erfindung nicht in zufriedenstellender Weise gelöst werden kann.

Versuche haben ergeben, daß mit einem Gehalt von 29 bis 32 % die gewünschten Produkteigenschaften besonders ausgeprägt sind.

Im Sinne der vorliegenden Erfindung beträgt daher der Ethylengehalt der Ethylen-Vinylalkohol-Copolymerschicht 29 bis 32 Gew.-%; insbesondere Mol.-% einzustellen, da hier eine besonders niedrige Gaspermeabilität zu verzeichnen ist. Darüber hinaus ist innerhalb dieses genannten Wertbereiches die Sterilisierbarkeit und die Stabilität der Kernschicht des erfindungsgemäßen Schichtaufbaus in besonderer Weise ausgeprägt.

Die Ethylen-Vinylalkohol-Copolymerschicht b) wird coextrudiert mit der Polypropylen-Homopolymerschicht a), die erfindungsgemäß eine Schichtdicke von 20 bis 40 µm, insbesondere 25 bis 35 µm aufweist. Diese Polypropylen-Homopolymerschicht schützt den Polyvinylalkohol der Kernschicht b) vor Feuchtigkeit und verleiht dem Gesamtaufbau die notwendige thermische Stabilität aufgrund des hohen Erweichungspunktes des Polypropylen-Homopolymers, der oberhalb der üblichen Sterilisierungstemperaturen anzusiedeln ist.

Hierbei sollte die Ethlyen-Vinylalkohol-Copolymerschicht b) bevorzugt eine Schichtdicke von 20 bis 30 µm aufweisen.

Die homophasige Polypropylen-Homopolymer- oder Polypropylen-Copolymerschicht c), die geeignet ist, die Innenseite eines Umbeutels des genannten Behälters zu bilden, weist eine Schichtdicke von 30 bis 50 mm, insbesondere 35 bis 45 µm auf. Auch hier ist die Bereitstellung eines Materials mit hohem Erweichungspunkt notwendig, der oberhalb der üblichen Sterilisierungstemperaturen liegt. Auch diese Schicht aus im wesentlichen Polypropylen schützt den Polyvinylalkoholanteil der Kernschicht b) vor Feuchtigkeit und verleiht dem Gesamtaufbau die gewünschte mechanische Stabilität.

Im Falle des Einsatzes von Polypropylen-Copolymeren besteht das statistische Copolymer neben dem Bestandteil Propylen insbesondere aus Ethylen, das in Mengen von 2 bis 5 Gew.-% in den Copolymeren enthalten sein kann.

Die Polypropylen-Homopolymerschicht a) kann gegebenenfalls 0,5 bis 2 Gew.-% eines Absorptionsmittels, insbesondere für Sauerstoff und/oder Schwefelwasserstoff enthalten, wobei die Verwendung von Fe₃O₄ im Sinne der vorliegenden Erfindung besonders bevorzugt ist.

Das Verfahren der Wahl zur Herstellung der erfindungsgemäßen Schlauchfolie ist das an sich bekannte Verfahren des Mehrschicht-Coextrusions-Blasens.

Das erfindungsgemäße Schlauchfolienmaterial ist heißsiegelfähig und peelfähig, so daß mit der erfindungsgemäßen Schlauchfolie Umbeutel, insbesondere durch Heißsiegeln hergestellt werden können, die entlang der Heißsiegelnähte auch wieder geöffnet werden können.

Der besondere Aufbau der erfindungsgemäßen coextrudierten Polymer-Composit-Schlauchfolie macht die Sterilisierung dieser Schlauchfolie in Form von Umverpackungen mittels der üblichen Sterilisierungsverfahren möglich, so daß, wie eingangs erwähnt, die Sterilität der Behälteraußenseite und der Entnahmevorrichtungen bis an das Krankenbett des Patienten gewährleistet werden.

Bevorzugte Sterilisierungsverfahren sind die Sterilisierung bei einer Temperatur von 121°C und einer Zeitdauer, die Sterilität im Autoklaven vom Dampftyp oder einer Wasserkaskade gewährleistet oder die Sterilisierung mit Ethylenoxid.

Im Stand der Technik der parenteralen Ernährung wurden bisher vielfach Sauerstoffabsorber eingesetzt, um die Inhaltsstoffe vor Sauerstoff zu schützen. Unter der Bezeichnung "ageless" ist beispielsweise ein Absorbermaterial auf der Basis von Eisensalzen im Handel erhältlich, das neben einer Verminderung des Sauerstoffgehalts gleichzeitig eine Reduktion des Gehalts an Schwefelwasserstoff hervorbringt, der bei üblichen Sterilisierungsverfahren aus schwefelhaltigen Inhaltsstoffen herrührt.

### Ausführungsbeispiele

### Vergleichsbeispiel 1

Ein 80 l Ansatz mit 0,5 g/l Na₂S₂O₅ entsprechend 337 mg/l SO₂ wurde in etwa 280 Beutel aus einer Mehrschichtfolie (Polyamid 11/ Polypropylen; V90 B. Braun) mit jeweils 200 ml Lösung abgefüllt und bei 121 °C im Verlauf von 15 min ohne Umbeutel sterilisiert.

### Beispiel 1

90 Beutel gemäß Vergleichsbeispiel 1 werden mit einem Umbeutel versehen, der der erfindungsgemäßen Schichtenfolge aus 28 mm Polypropylenhomopolymer mit einem Schmelzflussindex MFI (2,16/230) von 1,9, einem Biegemodul von 1400 mPa sowie einer Charpy-Stoßfestigkeit gemessen bei 23 °C von 6 kJ/m², 26 µm eines Ethylen-Vinylalkohol-Copolymers mit einem Ethylengehalt von 32 Mol.-% und 42 µm eines statistischen Copolymers aus Propylen/ Ethylen mit einem Schmelzflussindex von 1,8 und einem Biegemodul von 900 mPa bei einer Charpy-Schlagzähigkeit gemessen bei einer Temperatur von 23 °C von 8 kJ/m² umfasste. Dabei sind die Schichten jeweils durch 6 µm Orevac®-PPC, hergestellt von Atochem, verbunden. Der Umbeutel, d. h. die Schlauchfolie wurde durch Mehrschicht-Coextrusions-Blasverfahren aus den genannten Materialien erhalten. Die Umbeutel wurden durch an sich bekannte HeißsiegeNerfahren verschlossen.

Anschließend wurde wie in Vergleichsbeispiel 1 sterilisiert.

Die Hälfte dieser Beutel wurde bei Raumtemperatur oder bei +40°C eingelagert. Nach der in der Tabelle 1 angegebenen Zeit erfolgte eine enzymatische Sulfitbestimmung, jeweils bei 5 Beuteln pro Variante und Lagertemperatur.

Die Tabelle 1 gibt die erhaltenen Daten wieder.

### Beispiel 2

Analog Beispiel 1 wurden 90 V90-Beutel bereits vor der Sterilisation mit dem Umbeutel gemäß Beispiel 1 umhüllt und ebenfalls bei den im Beispiel 1 genannten Temperaturen eingelagert.

Mit den bei +40 °C gelagerten Varianten wurde bei je drei Beuteln eine ionenchromatographische Sulfatbestimmung durchgeführt, nachdem Sulfit nicht mehrweisbar war. Bei allen Varianten wurde die theoretisch zu erwartende Sulfatmenge von 505 mg/l gemessen.

### Vergleichsbeispiel 2

Die in Beispiel 1 genannten Beutel wurden zur Hälfte (d.h. 90 Beutel) mit einem handelsüblichen Umbeutelmaterial umfassend die Schichtenfolgen saranisiertes (PVDC) PVOH/LDPE/LLDPE, Dicke 88 µm umhüllt.

**Tabelle 1**

| SO₂-Gehalte (mg/l) von Beuteln mit verschiedener Außenverpackung nach Lagerung bei Raumtemperatur* und bei +40 °C**. Mittelwerte mit Standardabweichung von je 5 Beuteln pro Prüftermin. | | | |
|---|---|---|---|
| | Beispiel 1 | Beispiel 2 | Vergleichsbeispiel 2 |
| Lagerungszeit (Tage) | | | |
| 0* | 206,7 ± 2,3 | 193,2 ± 1,9 | 206 ± 2,3 |
| 5 | 73,2 ± 20,5 | 57,3 ± 14,0 | 71,6 ± 19,9 |
| 11 | 34,7 ± 6,9 | 32,0 ± 12,4 | 36,2 ± 4,9 |
| 14 | 16,1 ± 3,6 | 18,9 ± 3,6 | 16,0 ± 7,6 |
| 16 | 14,7 ± 2,4 | 16,2 ± 4,6 | 14,0 ± 3,9 |
| | | | |
| 0 ** | 206,7 ± 2,3 | 193,2 ± 1,9 | 206,7 ± 2,3 |
| 7 | 123,9 ± 12,1 | 114,4 ± 5,6 | 122,7 ± 5,4 |
| 14 | 90,7 ± 9,9 | 89,4 ± 7,9 | 90,1 ± 5,3 |
| 90 | 42,6 ± 10,1 | 28,4 ± 6,5 | 29,5 ± 10,3 |

Es zeigte sich, daß die erfindungsgemäßen Umverpackungen den Umverpackungen des Standes der Technik in Bezug auf die Sauerstoffdurchlässigkeit wenigstens gleichwertig oder verbessert sind. Als weiterer Vorteil der erfindungsgemäßen Beutel ist jedoch die bessere Umweltverträglichkeit gegenüber den Beuteln des Standes der Technik bemerkenswert.

## Patentansprüche

1. Sterilisierbare heißsiegel- und peelfähige Umverpackung aus coextrudierter Polymer-Composit-Schlauchfolie für Behälter enthaltend Lösungen, Suspensionen, Feststoffe oder Gemische zur parenteralen-, enteralen- oder Sondenernährung, gegebenenfalls in getrennter räumlicher Anordnung der Inhaltsstoffe mit einem dreilagigen Aufbau der Schlauchfolie bei einer Schichtenfolge
a) Polypropylen-Homopolymer mit einer Dicke von 20 bis 40 µm,
b) Ethylen-Vinylalkohol-Copolymer mit einem Ethylengehalt von 29 bis 32 Mol.-%, einer Schichtdicke von 15 bis 35 µm und
c) einem homophasigen Polypropylen-Homopolymer oder Polypropylen-Copolymer einer Dicke von 30 bis 50 µm, das geeignet ist, die Innenseite eines Umbeutels des Behälters zu bilden.

2. Umverpackung nach Anspruch 1, **dadurch gekennzeichnet, daß** die Polypropylenhomopolymerschicht a) eine Dicke 25 bis 35 µm aufweist.

3. Umverpackung nach Anspruch 1 oder 2, **dadurch gekennzeichnet, daß** die Ethylen-Vinylalkohol-Copolymerschicht b) eine Schichtdicke von 20 bis 30 µm aufweist.

4. Umverpackung nach einem der Ansprüche 1 bis 3, **dadurch gekennzeichnet, daß** die Polypropylen-Homopolymer- oder Polypropylen-Copolymerschicht c) eine Dicke von 35 bis 45 µm aufweist.

5. Umverpackung nach einem der Ansprüche 1 bis 4, **dadurch gekennzeichnet, daß** das Polypropylen-Copolymer neben Propylen aus Ethylen aufgebaut ist.

6. Verfahren zur Herstellung von Umverpackungen nach einem der Ansprüche 1 bis 5 durch Coextrusion.

7. Verfahren zur Herstellung von Umverpackungen nach einem der Ansprüche 1 bis 6 durch Heißsiegeln entlang einer Umfangskante von zwei gegeneinanderliegenden Schlauchfolien.

8. Verfahren nach Anspruch 7, wobei man bei einer Temperatur von 121 °C und einer Dauer sterilisiert, die Sterilität im Autoklaven vom Dampftyp oder einer Wasserkaskade gewährleistet.

9. Verfahren nach Anspruch 8, wobei man mittels Ethylenoxid sterilisiert.

## Claims

1. A sterilizable hot-sealable and peelable outer packing of coextruded polymer composite tubular film for containers containing solutions, suspensions, solids or mixtures for parenteral or enteral nutrition or tube feeding, optionally in a spatially separated arrangement of the contents, having a three-layered structure of the tubular film with the following layer sequence:
a) polypropylene homopolymer having a thickness of from 20 to 40 µm;
b) ethylene/vinyl alcohol copolymer with an ethylene content of from 29 to 32 mole % and a layer thickness of from 15 to 35 µm; and
c) homophase polypropylene homopolymer or polypropylene copolymer having a thickness of from 30 to 50 µm which is suitable for forming the interior surface of an outer bag of the container.

2. The outer packing according to claim 1, **characterized in that** said polypropylene homopolymer layer a) has a thickness of from 25 to 35 µm.

3. The outer packing according to claim 1 or 2, **characterized in that** said ethylene/vinyl alcohol copolymer layer b) has a layer thickness of from 20 to 30 µm.

4. The outer packing according to any of claims 1 to 3, **characterized in that** said polypropylene homopolymer or polypropylene copolymer layer c) has a thickness of from 35 to 45 µm.

5. The outer packing according to any of claims 1 to 4, **characterized in that** , said polypropylene copolymer is composed of ethylene in addition to propylene.

6. A method for the preparation of outer packings according to any of claims 1 to 5 by coextrusion.

7. A method for the preparation of outer packings according to any of claims 1 to 6 by hot-sealing along a perimeter edge of two adjoining tubular films.

8. The method according to claim 7, wherein sterilization is performed at a temperature of 121°C and for a period of time which ensures sterility in steam-type autoclaves or in a water cascade.

9. The method according to claim 8, wherein sterilization is performed with ethylene oxide.

## Revendications

1. Suremballage stérilisable, thermoscellable et pelable, constitué d'une feuille tubulaire obtenue par coextrusion, en un-composite polymère, pour des récipients contenant des solutions, des suspensions, des solides ou des mélanges pour alimentation par voie parentérale, par voie entérale ou par sonde, éventuellement selon une disposition spatiale distincte des constituants, avec une structure tricouche de la feuille tubulaire, présentant la séquence de couches suivante :
a) homopolymère polypropylène ayant une épaisseur de 20 à 40 µm,
b) copolymère d'éthylène-alcool vinylique ayant une teneur en éthylène de 29 à 32 % en moles, une épaisseur de couche de 15 à 35 µm, et
c) homopolymère polypropylène ou un copolymère de polypropylène homophasique, ayant une épaisseur de 30 à 50 µm, qui convient à la formation de la face intérieure d'un sachet d'enveloppement du récipient.

2. Suremballage selon la revendication 1, **caractérisé en ce que** la couche de l'homopolymère polypropylène (a), a une épaisseur de 25 à 35 µm.

3. Suremballage selon la revendication 1 ou 2, **caractérisé en ce que** la couche du copolymère d'éthylène-alcool vinylique (b) a une épaisseur de couche de 20 à 30 µm.

4. Suremballage selon l'une des revendications 1 à 3, **caractérisé en ce que** la couche (c) de l'homopolymère polypropylène ou du copolymère de polypropylène a une épaisseur de couche de 35 à 45 µm.

5. Suremballage selon l'une des revendications.1 1 à 4, **caractérisé en ce que** le copolymère de polypropylène est constitué non seulement de propylène, mais aussi d'éthylène.

6. Procédé de fabrication de suremballages selon l'une des revendication 1 à 5 par coextrusion.

7. Procédé de fabrication de suremballages selon l'une des revendication 1 à 6, thermoscellage, le long d'une arête périphérique de deux feuilles tubulaires disposées l'une contre l'autre.

8. Procédé selon la revendication 7, dans lequel on stérilise à une température de 121°C, et pendant un laps de temps qui garantit le caractère stérile dans un autoclave du type vapeur ou dans une cascade d'eau.

9. Procédé selon la revendication 8., dans lequel on stérilise à l'aide d'oxyde d'éthylène.
